(19) Europäisches Patentamt / European Patent Office / Office européen des brevets

(11) **EP 3 232 226 A1**

(12) **EUROPEAN PATENT APPLICATION**
published in accordance with Art. 153(4) EPC

(43) Date of publication:
**18.10.2017 Bulletin 2017/42**

(51) Int Cl.:
**G01S 17/95** *(2006.01)*     **G01S 7/484** *(2006.01)*

(21) Application number: **14908007.9**

(22) Date of filing: **12.12.2014**

(86) International application number:
**PCT/JP2014/083022**

(87) International publication number:
**WO 2016/092705 (16.06.2016 Gazette 2016/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Mitsubishi Electric Corporation Chiyoda-ku Tokyo 100-8310 (JP)**

(72) Inventors:
• **KOTAKE, Nobuki Tokyo 100-8310 (JP)**
• **IMAKI, Masaharu Tokyo 100-8310 (JP)**
• **KAMEYAMA, Shumpei Tokyo 100-8310 (JP)**
• **TAMAGAWA, Yasuhisa Tokyo 100-8310 (JP)**

(74) Representative: **Pfenning, Meinig & Partner mbB Patent- und Rechtsanwälte Theresienhöhe 11a 80339 München (DE)**

(54) **LASER RADAR DEVICE**

(57) A laser radar device is described that includes a multi-wavelength light oscillator 1 to generate a plurality of light beams with different wavelengths, a plurality of modulation units 3 to modulate each of the plurality of light beams generated by the multi-wavelength light oscillator with a modulation frequency altered according to a corresponding line of sight of emission, a transmitting/receiving optical system 8 to emit each of the light beams modulated by the modulation units in a corresponding line of sight, and receive reflected light beams, an optical receiver 11 to perform heterodyne detection by using the generated light beams and the received light beams corresponding to the generated light beams, and detect beat signals in the respective lines of sight, and a signal analyzing unit 12 to calculate a value of Doppler wind speed in the respective lines of sight from the respective beat signals, and calculate a value of three-dimensional wind speed using the values of Doppler wind speed

FIG.1

EP 3 232 226 A1

**Description**

TECHNICAL FIELD

The present invention relates to a laser radar device for measuring a value of wind speed in an observation space.

BACKGROUND ART

A radar device is known as a device for measuring the position of an object located in a remote observation space. The radar device emits a wave such as an electromagnetic wave or sound wave toward the observation space, and receives a wave reflected by a target object. The distance and angle from the radar device to the object is measured by analyzing the received signal.

Among radar devices, a meteorological radar device is known that observes very small airborne liquid or solid particles (aerosols) in the atmosphere, and detects a velocity of aerosol movement (that is, a wind velocity) from the amount of phase rotation of the reflected wave. Among meteorological radar devices, a laser radar device using light as the electromagnetic wave has a very narrow beam width that allows observation of an object at high angle resolution. Thus, laser radar devices are used as a radar device for measuring the speed and direction of wind.

A conventional Doppler lidar (LIght Detection And Ranging: Lidar) emits a laser beam of a single wavelength into the atmosphere, and carries out heterodyne detection of a received signal, thereby being able to obtain a value of wind speed in the direction of the laser beam. And then, the laser beam is scanned to obtain values of wind speed in multiple directions. Based on the obtained values of wind speed and vector operation, a value of wind speed in the horizontal direction can be obtained.

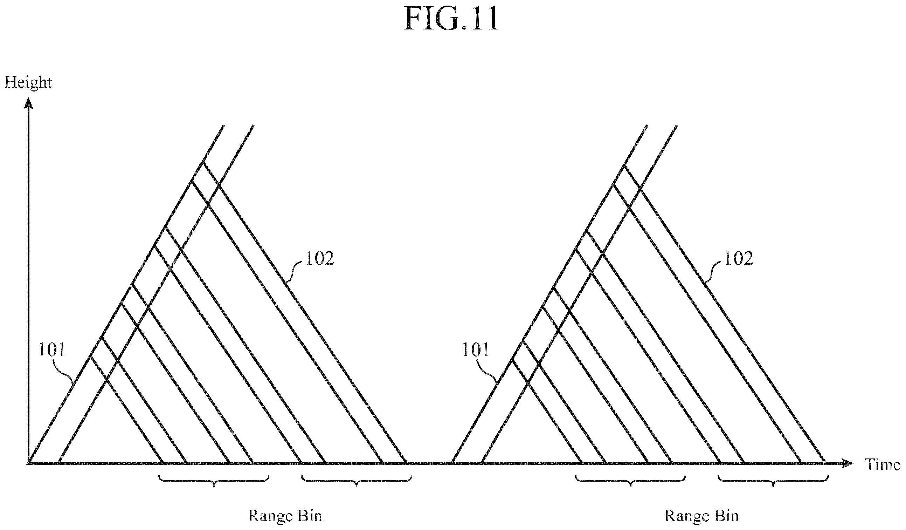

A conventional laser radar device sends out a laser beam into the atmosphere, and then receives the laser beam that has experienced a Doppler frequency shift caused by the velocity of aerosol movement in the atmosphere. Then, the device detects a Doppler signal corresponding to the wind velocity by carrying out heterodyne detection between the received laser beam and the local light. Here, in general, subsections of the light beam reflected from the aerosols in the atmosphere at individual heights obtained at each time period are referred to as range bins (see FIG. 11). In FIG. 11, a reference numeral 101 designates a laser beam sent out from the laser radar device, and a reference numeral 102 designates a reflected light beam from an aerosol. Within a range bin, coherent integration of the received signals at fine intervals is carried out.

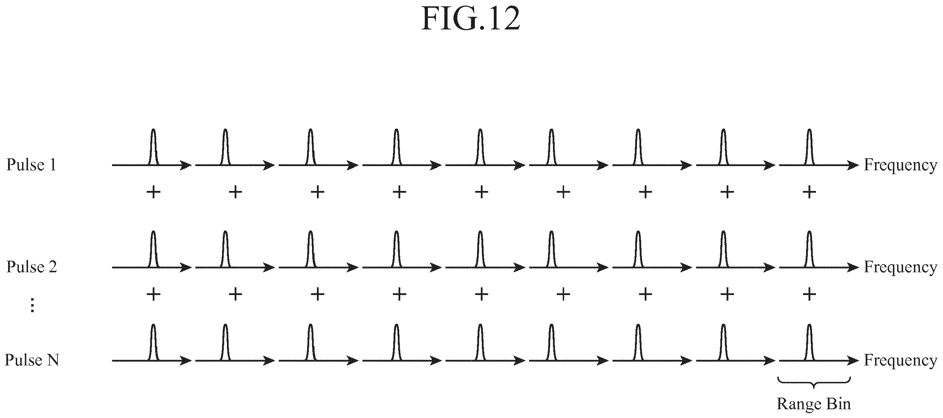

After applying the Fourier transform within the range bin, the laser radar device carries out incoherent integration of N pulses as shown in FIG. 12. By this, signal to noise ratio (referred to as SNR from now on) can be improved. The foregoing is a method for obtaining a value of wind speed in any one line of sight. Scanning the laser beam in a plurality of lines of sight yields values of wind speed in the plurality of lines of sight. A value of wind speed in the horizontal direction can be calculated using the obtained values of wind speed in the plurality of lines of sight and one or more methodologies, including vector operation and the velocity azimuth display (VAD) (see Non-Patent Document 1, for example). Note that calculating the value of horizontal wind speed in this manner is made on the assumption that the wind directions and wind speeds are uniform during a cycle scanning.

CITATION LIST

PATENT LITERATURE

Patent Document 1: PCT/JP2013/063692.
Patent Document 2: PCT/JP2013/055825.
Patent Document 3: Japanese Patent Laid-Open No. 2008-39640.

NON-PATENT LITERATURE

Non-Patent Document 1: Browning and Wexler, J. Appl. Meteor., 4, 727-740, 1968.

SUMMARY OF INVENTION

TECHNICAL PROBLEM

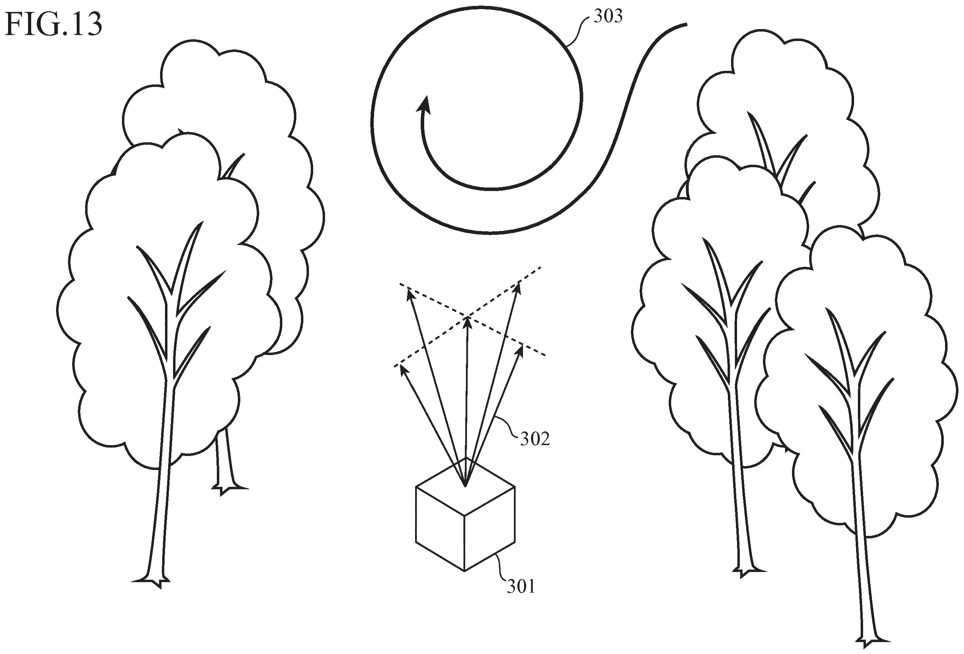

In practice, however, a turbulent flow 303 as shown in FIG. 13 can occur, so that there are many cases in which the uniformity of the wind, which is the assumption, cannot be guaranteed. Note that, in FIG. 13, a reference numeral 301 designates a laser radar device, and a reference numeral 302 designates a laser beam sent out from the radar device. The scanning speed and the number of observation directions have the following relationships.

$$(1) \quad (\text{Time taken to measure wind velocity})^{-1} \propto (\text{Wind velocity measurement accuracy})$$

Generally, a time taken for a single measurement of a wind velocity has a correlation with the accuracy of wind velocity measurement. In particular, as for the measurement of a turbulent flow, there is a tendency that the shorter the measurement time is, the higher the wind velocity measurement accuracy is.

$$(2) \quad (\text{Time taken to measure wind velocity}) = (\text{Time taken to acquire data in one direction}) * M \ (\text{where M is the number of lines of sight}).$$

Although there are many scanning methods such as scanning by mechanical drive using a wedge or scanning using an optical switch, the time taken for one cycle increases with the number of lines of sight to be observed because directions are switched.

$$(3) \quad (\text{The number of lines of sight}) \propto (\text{Wind velocity measurement accuracy}).$$

Because of the principle of the wind velocity calculation, the number of lines of sight is in proportion to the wind velocity measurement accuracy. In particular, the foregoing VAD method has a strong proportional relation because it uses a statistic.

$$(4) \quad (\text{The number of lines of sight}) \propto (\text{Time taken to measure wind velocity})^{-1}.$$

According to the conventional configuration, the number of lines of sight is inversely proportional to the time taken to measure the wind velocity.

For the foregoing reasons, the conventional method of calculating a wind velocity in which measurement of observation per line of sight is carried out in a plurality of lines of sight presents a problem of deteriorating the wind velocity measurement accuracy in a turbulent field.

The present invention has been made to solve the foregoing problem. Accordingly, it is an object of the present invention to provide a laser radar device capable of reducing the deterioration of the wind velocity measurement accuracy even in a turbulent field.

SOLUTION TO PROBLEM

A laser radar device in accordance with the present invention includes, a multi-wavelength light oscillator to generate a plurality of light beams with different wavelengths, a plurality of modulation units to modulate each of the plurality of light beams generated by the multi-wavelength light oscillator with a modulation frequency altered according to a corresponding line of sight of emission, a transmitting/receiving unit to emit each of the light beams modulated by the modulation units in a corresponding line of sight, and receive reflected light beams, an optical receiver to perform heterodyne detection by using the light beams generated by the multi-wavelength light oscillator and the light beams that are received by the transmitting/receiving unit and corresponding to the generated light beams, and detect beat signals in the respective lines of sight, and a signal analyzing unit to calculate a value of Doppler wind speed in the respective lines of sight from the respective beat signals detected by the optical receiver, and calculate a value of three-dimensional wind speed using the values of Doppler wind speed.

ADVANTAGEOUS EFFECTS OF INVENTION

Since the laser radar device according to an aspect of the present invention is configured above, the laser radar device can reduce the deterioration of the wind velocity measurement accuracy even in the turbulent field.

BRIEF DESCRIPTION OF DRAWINGS

FIG. 1 is a block diagram showing a configuration of a laser radar device in accordance with Embodiment 1 of the present invention;
FIG. 2 is a block diagram showing a configuration of a modulation unit in accordance with Embodiment 1 of the present invention;
FIG. 3 is a block diagram showing a configuration of a signal analyzing unit in accordance with Embodiment 1 of the present invention;
FIG. 4 is a flowchart showing the operation of the laser radar device in accordance with Embodiment 1 of the present invention;
FIG. 5 is a diagram showing the center frequency of light in each line of sight in the laser radar device in accordance with Embodiment 1 of the present invention;
FIG. 6 is a block diagram showing a configuration of a laser radar device in accordance with Embodiment 2 of the present invention;
FIG. 7 is a flowchart showing the operation of the signal analyzing unit in accordance with Embodiment 2 of the present invention;
FIG. 8A shows a diagram illustrating a scanning method of a conventional laser radar device, while FIG. 8B shows a diagram illustrating a scanning method of the laser radar device in accordance with Embodiment 2 of the present invention in comparison with the conventional method;
FIGS. 9A-9C is a diagram showing a problem involved with the scanning method of the conventional laser radar device;
FIGS. 10A-10C is a diagram illustrating an effect provided by using the scanning method of the laser radar device in accordance with Embodiment 2 of the present invention;
FIG. 11 is a diagram illustrating range bins in the conventional laser radar device;
FIG. 12 is a diagram illustrating incoherent integration in the conventional laser radar device; and
FIG. 13 is a diagram illustrating an environment in which the wind velocity measurement accuracy is likely to be deteriorated when the wind velocity is measured with the conventional laser radar device is used.

DESCRIPTION OF EMBODIMENTS

Hereinafter, embodiments for carrying out the invention will be described with reference to the accompanying drawings.

EMBODIMENT 1

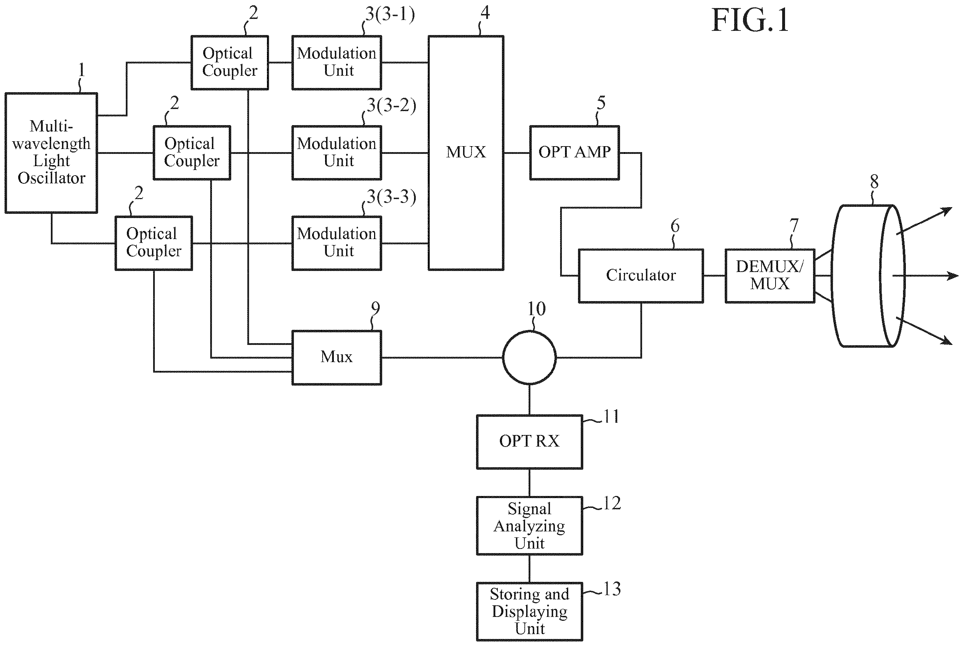

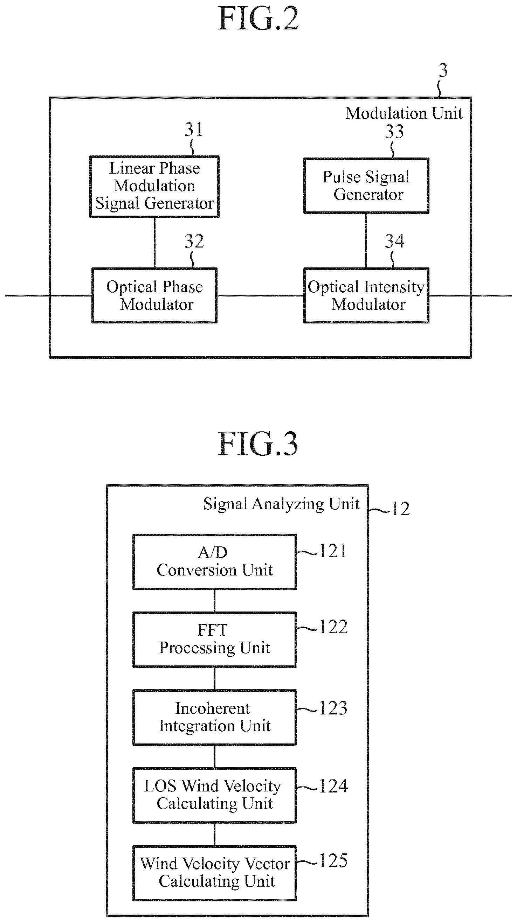

FIG. 1 is a block diagram showing a configuration of a laser radar device in accordance with Embodiment 1 of the present invention.
As shown in FIG. 1, the laser radar device includes a multi-wavelength light oscillator 1, a plurality of optical couplers 2, a plurality of modulation units 3, a multiplexer 4, an optical amplifier 5, a circulator 6, a demultiplexer/multiplexer 7, a transmitting/receiving optical system (transmitting/receiving unit) 8, a multiplexer 9, a multiplexing coupler 10, an optical receiver 11, a signal analyzing unit 12 and a storing and displaying unit 13.
The multi-wavelength light oscillator 1 is a component for causing oscillations to occur at multiple wavelengths to generate a plurality of light beams (laser beams) with different wavelengths. According to the illustration in FIG. 1, it is shown that three light beams are generated by the multi-wavelength light oscillator 1. However, any number of light beams more than one works. Each of the light beams generated by the multi-wavelength light oscillator 1 is output to a corresponding optical coupler 2.
The optical couplers 2 each split the light beam from the multi-wavelength light oscillator 1 into two ones. One of the two light beams output from the optical coupler 2 is to be used as a light beam to be transmitted, and therefore is output to a corresponding modulation unit 3. In addition, the other of the two light beams output from the optical coupler 2 is to be used to carry out heterodyne detection by the optical receiver 11, and therefore is output to the multiplexer 9.
The modulation units 3 each carry out modulation (pulse modulation) of the light beam output from the optical coupler 2 by altering modulation frequency (center frequency) according to line of sight in which the transmitting/receiving optical system 8 emits a light beam. An exemplary configuration of the modulation unit 3 includes an Acousto-Optic Modulator (AOM) and an AO frequency shifter. Alternatively, the modulation unit 3 may be configured as shown in FIG. 2.

The modulation unit 3 that is shown in FIG. 2 includes a linear phase modulation signal generator 31, an optical phase modulator 32, a pulse signal generator 33 and an optical intensity modulator 34.

The linear phase modulation signal generator 31 is a component for generating a sawtooth wave with any period. The linear phase modulation signal generator 31 may be configured using a function generator, for example.

The optical phase modulator 32 is a component for carrying out phase modulation of the light beam output from the optical coupler 2 in accordance with the sawtooth wave generated by the linear phase modulation signal generator 31. By this, the frequency of the light beam is shifted. An amount of frequency shift in frequency shifting may be set to any amount in each modulation units 3 to produce frequencies with any frequency interval.

The pulse signal generator 33 is a component for generating pulse signals for turning ON and OFF the optical intensity modulator 34.

The optical intensity modulator 34 is driven in response to the pulse signals generated by the pulse signal generator 33, and carries out pulse modulation of the phase modulated light beam from the optical phase modulator 32. The optical intensity modulator 34 may include a Lithium Niobate modulator (LN modulator), Micro Electro Mechanical System (MEMS) optical switch, or the like.

The light beam that experiences pulse modulation by the modulation unit 3 is output to the multiplexer 4.

The multiplexer 4 is a component for multiplexing the light beams from the individual modulation units 3. The resultant multiplexed light beam obtained by multiplexing by the multiplexer 4 is output to the optical amplifier 5.

The optical amplifier 5 is a component for amplifying the light beam from the multiplexer 4. The optical amplifier 5 is provided optionally; the optical amplifier 5 is not necessary for some applications or if the optical output power of the multi-wavelength light oscillator 1 is high. The light beam amplified by the optical amplifier 5 is output to the demultiplexer/multiplexer 7 via the circulator 6.

The circulator 6 is a component to switch output destination according to input light beam. The circulator 6 routes the light beam from the optical amplifier 5 to the demultiplexer/multiplexer 7, and routes the light beam from the demultiplexer/multiplexer 7 to the multiplexing coupler 10.

The demultiplexer/multiplexer 7 demultiplexes the light beam fed from the optical amplifier 5 via the circulator 6 according to the different wavelengths, and multiplexes the light beams fed from the transmitting/receiving optical system 8. As the demultiplexer/multiplexer 7, a Wavelength Division Multiplexer (WDM) may be used, for example. Although the demultiplexer/multiplexer 7 can also be implemented by using a Fabry-Perot interferometer, using a WDM that is widely used for conventional communications provides low loss and reduces cost. The demultiplexer/multiplexer 7 may be implemented by other devices that separate the light beam according to wavelength or frequency. The light beam demultiplexed by the demultiplexer/multiplexer 7 is output to the transmitting/receiving optical system 8. The resultant light beam obtained from multiplexing by the demultiplexer/multiplexer 7 is output to the multiplexing coupler 10 via the circulator 6.

The transmitting/receiving optical system 8 is a component for emitting the light beams from the demultiplexer/multiplexer 7 in respective line of sight, and for receiving the light beams that are reflected by aerosols. The transmitting/receiving optical system 8 includes a single or a plurality of telescopes. In the case of a single telescope, emission angle and incident angle of light beam may be altered according to, for example, a position and angle of the fibers, or a diffraction grating that alters emission angle of light beam according to wavelength may be used. Light beams received by the transmitting/receiving optical system 8 are output to the demultiplexer/multiplexer 7.

The multiplexer 9 is a component for multiplexing the light beams from the optical couplers 2. The light beam resulting from the multiplexing by the multiplexer 9 is output to the multiplexing coupler 10.

The multiplexing coupler 10 is a component for multiplexing the light beam from the multiplexer 9 and the light beam from the demultiplexer/multiplexer 7 via the circulator 6.

The optical receiver 11 is a component for carrying out heterodyne detection by using the light beams from the multiplexing coupler 10 (the light beam oscillated by the multi-wavelength light oscillator 1 and the corresponding light beam received by the transmitting/receiving optical system 8) to detect a beat signal for each line of sight. As the optical receiver 11, a balanced receiver may be used. The individual beat signals detected by the optical receiver 11 are output to the signal analyzing unit 12.

The signal analyzing unit 12 is a component for calculating a value of Doppler wind speed from a beat signal supplied from the optical receiver 11 for each line of sight, and for calculating a value of three-dimensional wind speed using the values of Doppler wind speed. As shown in FIG. 3, the signal analyzing unit 12 includes an analog to digital (A/D) converter 121, an fast Fourier transform (FFT) processing unit 122, an incoherent integration unit 123, a line-of-sight wind velocity calculating unit 124, and a wind velocity vector calculating unit 125. The individual components of the signal analyzing unit 12 can be implemented by a CPU executing one or more software programs.

The A/D conversion unit 121 converts each beat signal from the optical receiver 11 into a digital signal.

The FFT processing unit 122 carries out FFT processing on each digitized signal converted by the A/D conversion unit 121.

The incoherent integration unit 123 carries out incoherent integration of the signals that are obtained by the FFT processing by the FFT processing unit 122.

The line-of-sight wind velocity calculating unit 124 carries out peak detection, gravity center calculation, or other processing on the signals that are obtained by the incoherent integration by the incoherent integration unit 123 to calculate a Doppler frequency, and calculates a value of Doppler wind speed for each line of sight from the Doppler frequency.

The wind velocity vector calculating unit 125 calculates a value of three-dimensional wind speed (a value of wind speed in the horizontal direction or vertical direction) from the values of Doppler speed in plural directions calculated by the line-of-sight wind velocity calculating unit 124.

The data that shows a calculation result by the signal analyzing unit 12 is output to the storing and displaying unit 13.

The storing and displaying unit 13 stores the data from the signal analyzing unit 12, and displays the stored data on a monitor (not shown). The storing and displaying unit 13 includes a storing device such as a RAM or a hard disk, a graphics processing unit (GPU), a display, and so on.

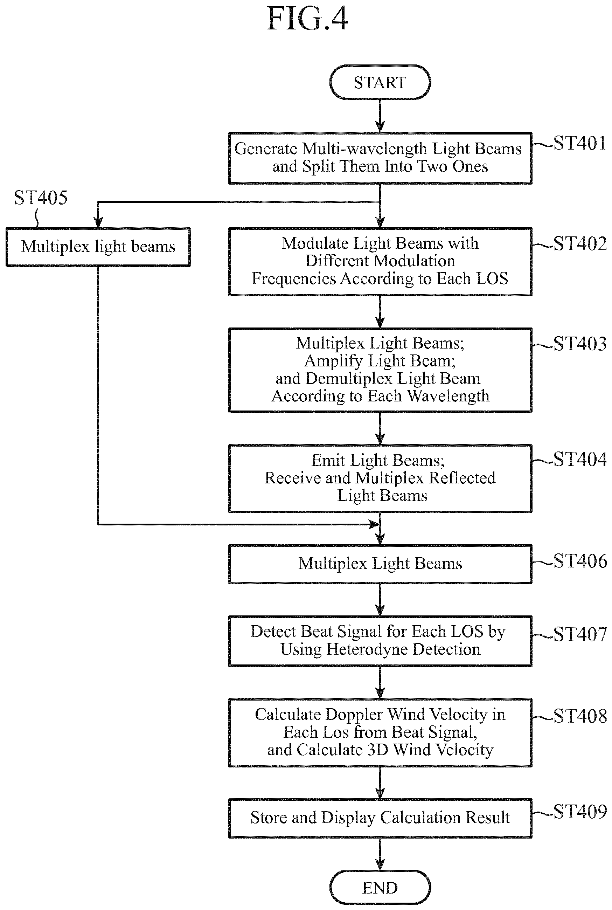

In the following, the operation of the laser radar device configured as described above will be described with reference to FIG. 4.

As shown in FIG. 4, in the operation of the laser radar device, the multi-wavelength light oscillator 1 generates a plurality of light beams with different wavelengths, first, and the optical couplers 2 each splits a corresponding light beam into two light beams (step ST401). One of the two light beams output from the optical coupler 2 is output to the corresponding modulation unit 3, and the other of the two light beams is output to the multiplexer 9.

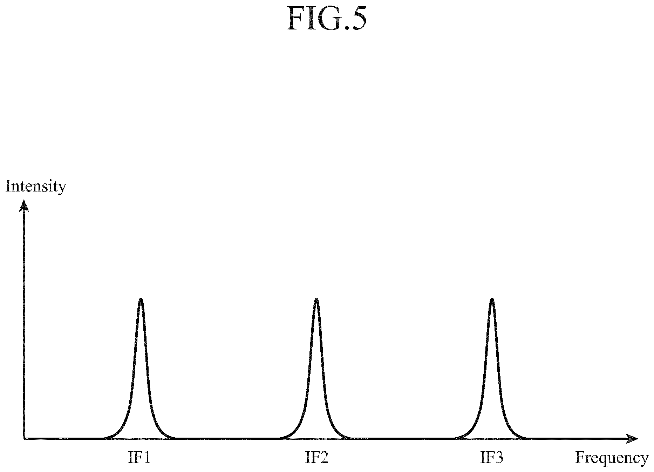

Next, the modulation units 3 each carries out pulse modulation of the light beam from the corresponding optical coupler 2 with a modulation frequency altered according to a line of sight in which the transmitting/receiving optical system 8 emits a light beam (step ST402). More specifically, the individual modulation units 3-1 to 3-3 shown in FIG. 1 carry out intensity modulation at different modulation frequencies, for example, IF1 to IF3 as shown in FIG. 5. Thus, by altering the modulation frequency according to the line of sight of light beam enables distinction of the directions from which the signals obtained by the signal analyzing unit 12 arrive, thereby being able to carry out simultaneous observations of multiple directions. The light beams obtained with pulse modulation by the individual modulation units 3 are output to the multiplexer 4.

Next, the multiplexer 4 multiplexes the light beams from the modulation units 3, the optical amplifier 5 amplifies the light beam resulting from the multiplexing, and the demultiplexer/multiplexer 7 demultiplexes the amplified light beam into ones with each wavelength (step ST403). Thus providing the multiplexer 4 before the optical amplifier 5 and the demultiplexer/multiplexer 7 after the circulator 6 can obviate the need for preparing the optical amplifier 5 and circulator 6 for each wavelength. That is, it is sufficient to provide a single pair of the optical amplifier 5 and the demultiplexer/multiplexer 7. Therefore, this arrangement contributes to the downsizing of the device and the cost reduction of making the device. Note that the amplification is not performed if the optical amplifier 5 is not necessary. The resultant light beams demultiplexed by the demultiplexer/multiplexer 7 are output to the transmitting/receiving optical system 8.

Next, the transmitting/receiving optical system 8 emits the light beams from the demultiplexer/multiplexer 7 into corresponding lines of sight and receives the light beams reflected by aerosols, and the demultiplexer/multiplexer 7 multiplexes the received light beams (step ST404). The light beam resulting from the multiplexing by the demultiplexer/multiplexer 7 is output to the multiplexing coupler 10 via the circulator 6.

On the other hand, the multiplexer 9 multiplexes the light beams from the optical couplers 2 (step ST405). Thus providing the multiplexer 9 at the stage before the multiplexing coupler 10 and optical receiver 11 can obviate the need for preparing the multiplexing coupler 10 and optical receiver 11 for each wavelength. That is, it is sufficient to provide a single multiplexing coupler 10 and a single optical receiver 11. In addition, when carrying out the heterodyne detection, since the optical receiver 11 has a characteristic of being able to detect the beat signal only if the wavelengths are the same, the present configuration can contribute to the downsizing and cost reduction of the device. The resultant light beam multiplexed by the multiplexer 9 is output to the multiplexing coupler 10.

Next, the multiplexing coupler 10 multiplexes the light beam from the multiplexer 9 and the light beam from the demultiplexer/multiplexer 7 via the circulator 6 (step ST406). The light beam resulting from the multiplexing by the multiplexing coupler 10 is output to the optical receiver 11.

Next, the optical receiver 11 carries out heterodyne detection using the light beam from the multiplexing coupler 10 to detect beat signals corresponding to the lines of sight (step ST407). The individual beat signals detected by the optical receiver 11 are output to the signal analyzing unit 12.

Next, the signal analyzing unit 12 calculates a value of Doppler wind speed for each line of sight from the beat signal from the optical receiver 11, and calculates a value of three-dimensional wind speed from the values of Doppler wind speed (step ST408). The operation of the signal analyzing unit 12 will be described below.

In the signal analyzing unit 12, the A/D conversion unit 121 first carries out the A/D conversion of each beat signal from the optical receiver 11, and then the FFT processing unit 122 performs the FFT processing of each digitized signal. More specifically, FFT processing is made to the A/D converted broadband signals, thereby obtaining a frequency bandwidth of IF ± fw as the spectral data for each line of sight. Therefore, the signals are distinguished from each other according to line of sight in the signal analyzing unit 12. Note that the frequency bandwidth of the spectral data occupied by each channel may be set to IF + 2fw + α (α is a margin).

The fw can be calculated from the one side width $v_w$ and the wavelength λ of the value of wind speed to be measured, according to the following Expression (1). When the value of wind speed to be measured is, for example, ±30 m/s, the "one side width" of the value of wind speed is its absolute value 30.

$$fw = (2/\lambda) * v_w \qquad (1)$$

On the other hand, in observations in which aerosols are targeted, since a back scattering coefficient is low, it is necessary to improve the SNR by integration. For this reason, the incoherent integration unit 123 carries out incoherent integration of the individual signals (one or more spectral data) that has passed through the FFT processing by the FFT processing unit 122. Note that, depending on values of SNR of the spectral data obtained by the FFT processing unit 122, the processing by the incoherent integration unit 123 may be omitted.

After that, the line-of-sight wind velocity calculating unit 124 calculates Doppler frequencies from the signals resulting from the incoherent integration by the incoherent integration unit 123 by carrying out peak detection or gravity center calculation, and calculates values of Doppler wind speed in the individual lines of sight from the Doppler frequencies. Note that a value of Doppler wind speed $v_{los}$ (m/s) can be calculated by the following Expression (2) using a Doppler frequency fd (Hz) and wavelength λ.

$$v_{los} = \lambda * fd \qquad (2)$$

After that, the wind velocity vector calculating unit 125 calculates a value of three-dimensional wind speed from the values of Doppler wind speed in multiple directions calculated by the line-of-sight wind velocity calculating unit 124.

Note that another signal processing method that is different from the above-explained one may be used. For example, signal processing method may depend on an SNR obtained, as in Patent Document 1.

The data indicating the calculation result by the signal analyzing unit 12 is output to the storing and displaying unit 13.

After that, the storing and displaying unit 13 stores the data from the signal analyzing unit 12, and displays the stored data on the monitor (not shown) (step ST409).

As described above, according to the present embodiment 1, it is configured in such a manner that it oscillates a plurality of light beams with wavelengths different from each other, and carries out the modulation of the light beams while altering the modulation frequencies in accordance with radial directions of the light beams emitted. Thus, it emits the light beams in multiple directions simultaneously without scanning with a light beam, thereby being able to observe the values of wind speed in the multiple directions simultaneously. As a result, it can reduce the deterioration of the wind velocity measurement accuracy even in the turbulent field, and to improve the wind velocity measurement rate.

Incidentally, as for the transmitting/receiving optical system 8 and signal analyzing unit 12, a configuration is also possible which alters the focusing distance using a distance-SNR profile acquired as in the Patent Document 2, for example. This will enable the data acquisition rate to be improved.

EMBODIMENT 2

Embodiment 2 shows a system for improving the accuracy of the wind velocity measurement by performing a scanning method that is different from conventional ones without measuring wind speeds in multiple directions simultaneously.

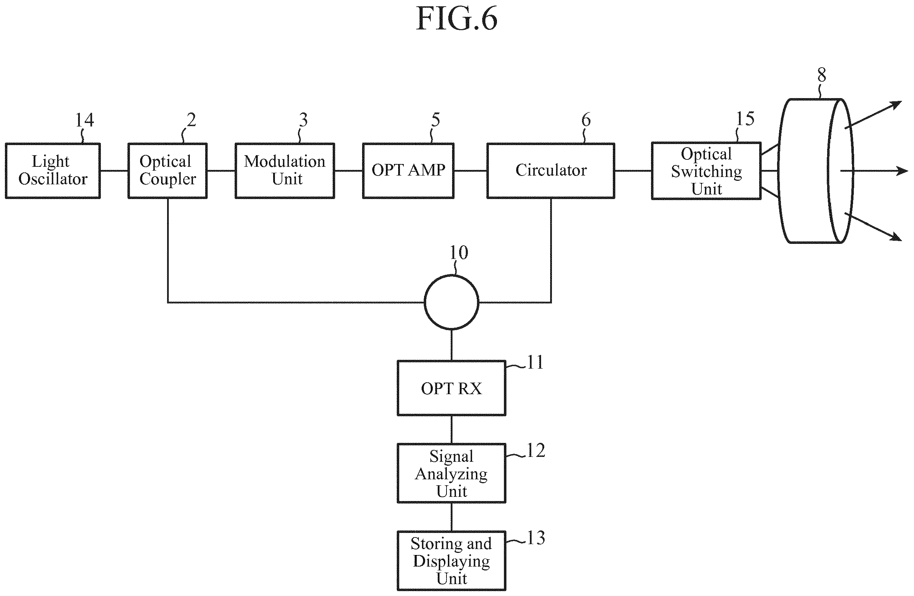

FIG. 6 is a diagram showing a laser radar device according to Embodiment 2 of the present invention. The laser radar device of Embodiment 2 shown in FIG. 6 differs from the laser radar device in Embodiment 1 shown in FIG. 1 in that the multi-wavelength light oscillator 1 is replaced with a light oscillator 14; a plurality of optical couplers 2 and modulation units 3 are respectively replaced with a single optical coupler 2 and a single modulation unit 3; the multiplexer 4, demultiplexer/multiplexer 7 and multiplexer 9 are removed; and an optical switching unit 15 is added. Since the other components are the same, they are designated with the same reference numerals, and different portions only will be described.

The light oscillator 14 is a component for causing an oscillation to occur at a single wavelength to generate a light beam with the wavelength. The light beam generated by the light oscillator 14 is output to the optical coupler 2.

The optical switching unit 15 is a component for switching, per emission, lines of sight in which the light beam from the optical amplifier 5 via the circulator 6 is to be emitted, and selecting one of the lines of sight. The optical switching unit 15 outputs the light beam to the transmitting/receiving optical system 8 through a path corresponding to a selected line of sight. The optical switching unit 15 may be implemented using an optical switch. Alternatively, instead of using an optical switch, the optical switching unit 15 may be implemented using a wedge scanner capable of high speed scanning.

Then, the transmitting/receiving optical system 8 emits the light beam from the optical switching unit 15 in the line of sight that is selected by the optical switching unit 15.

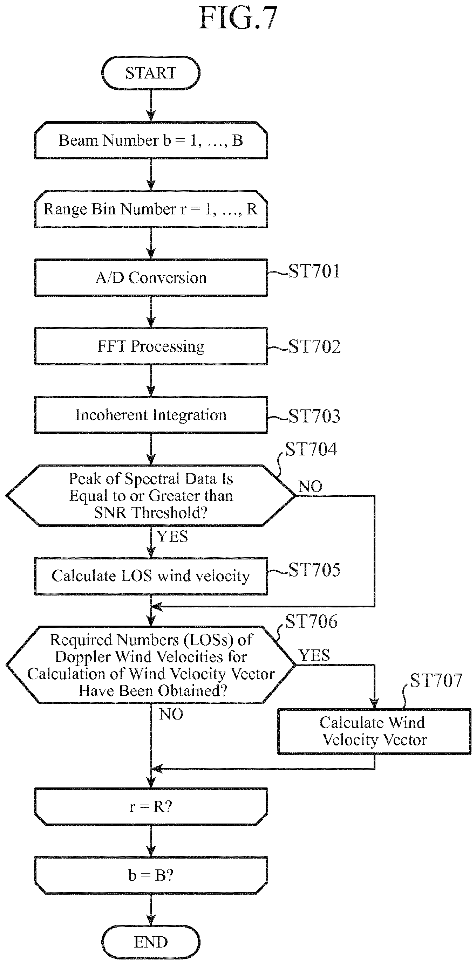

Unlike Embodiment 1, the signal analyzing unit 12 cannot obtain the beat signals for multiple directions simultaneously, but it receives beat signals corresponding to each line of sight successively. The operation of the signal analyzing unit 12 according to Embodiment 2 will be described below with reference to FIG. 7.

In the signal analyzing unit 12 according to Embodiment 2, the A/D conversion unit 121 first carries out the A/D conversion of a beat signal from the optical receiver 11, and then FFT processing unit 122 performs the FFT processing of the digitized signal (steps ST701 and ST702).

After that, the incoherent integration unit 123 carries out the incoherent integration of the signal (one of more spectral data) that has passed through the FFT processing by the FFT processing unit 122 (step ST703). Note that, depending on values of SNR of the spectral data obtained by the FFT processing unit 122, the processing by the incoherent integration unit 123 may be omitted.

After that, the line-of-sight wind velocity calculating unit 124 determines whether or not the peak of the signal (spectral data) resulting from the incoherent integration by the incoherent integration unit 123 is equal to or greater than an SNR threshold (step ST704).

When the line-of-sight wind velocity calculating unit 124 determines that the peak of the spectral data is not less than the SNR threshold at step ST704, the unit 124 considers that the spectrum intensity of the current range bin and in the line of sight is sufficient and calculates a value of Doppler wind speed (step ST705). At this time, the unit 124 calculates the Doppler frequency by carrying out the peak detection or gravity center calculation on the spectral data. Then, the unit 124 calculates the value of Doppler wind speed $v_{los}$ from the calculated Doppler frequency fd using, for example, the following Expression (3). Note that $\lambda$ is the wavelength.

$$v_{los} = \lambda * fd \qquad (3)$$

On the other hand, if the line-of-sight wind velocity calculating unit 124 determines that the peak of the spectral data is less than the SNR threshold at step ST704, no Doppler wind speed is calculated.

After that, the wind velocity vector calculating unit 125 determines whether or not required numbers (lines of sight) of values of Doppler wind speed for calculation of a value of three-dimensional wind speed have been obtained (step ST706).

If the wind velocity vector calculating unit 125 determines at step ST706 that required numbers (LOSs) of values of Doppler wind speed for calculation of a value of three-dimensional wind speed have been obtained, the unit 125 calculates a value of three-dimensional wind speed from the obtained values of Doppler speed in the multiple directions (step ST707).

On the other hand, if the wind velocity vector calculating unit 125 determines at step ST706 that required numbers (LOSs) of values of Doppler speed for calculation of a value of three-dimensional speed have not been obtained, no three-dimensional wind speed is calculated. After that, the process proceeds to the processing of the next range bin along the next line of sight.

Thus obtaining the minimum necessary signal amount (SNR) in each range bin by the incoherent integration makes it possible to increase the rate of the wind velocity measurement to the maximum extent. Accordingly, the accuracy of the wind velocity measurement can be improved.

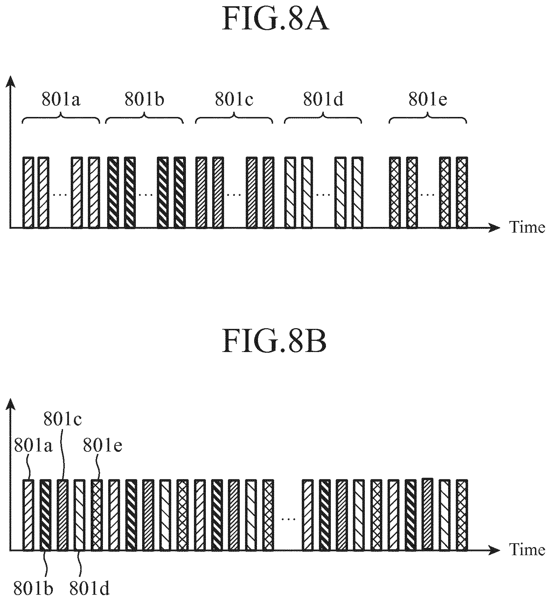

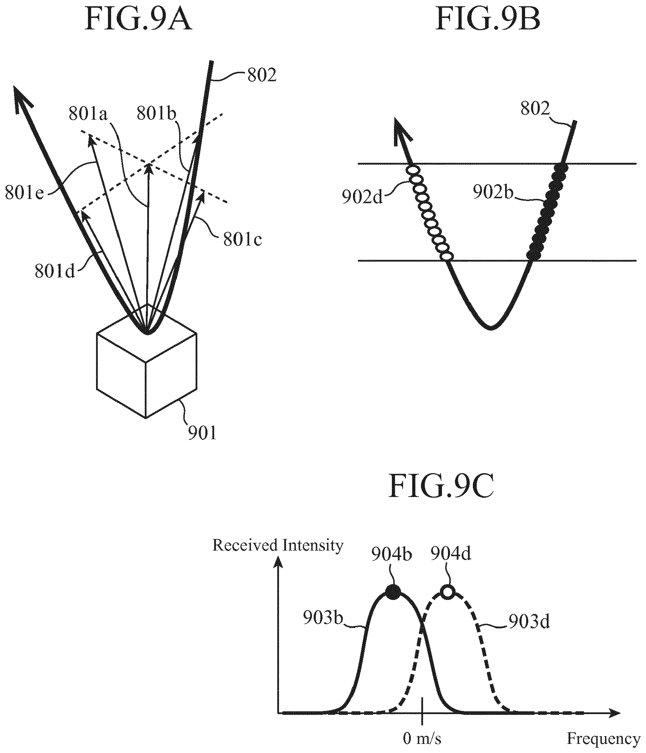

On the other hand, the conventional configuration shown in Patent Document 3, for example, predefines a specific incoherent integration in advance, acquires data of a fixed number of additions in a line of sight, and then switches to the next line of sight. More specifically, as shown in FIG. 8A, in the conventional method, a plurality of observations in a line of sight are performed first, and then scanning is switched to the next line of sight. According to the scanning method, even if an amount of aerosol is large and the number of additions at least allows for measurement of a wind velocity, superfluous observing time is consumed. Further, long observing time in each line of sight can cause the problem as shown in FIG. 9.

FIG. 9A shows observations in lines of sight 801a-801e by using a conventional laser radar device 901. The reference numeral 802 indicates the wind to be observed, which is shown as including a downdraft and updraft. Further, FIG. 9B shows observation points 902b and 902d at the time of observation along the lines of sight 801b and 801d, respectively. Further, FIG. 9C shows a spectrum 903b in the line of sight 801b and a result 904b of gravity center calculation, and a spectrum 903d in the line of sight 801d and a result 904d of gravity center calculation.

In the example shown in FIG. 9, a wind speed in the horizontal direction of the wind 802 is small in practice. However, according to conventional general vector operation methodologies that use the following Expression (4), a great value of wind speed in the horizontal direction is calculated. This is because of a lack of uniformity of the wind speed and wind direction, which is a prerequisite for the wind velocity vector operation.

$$V = (v_2 - v_4) / \sin\theta \qquad\qquad (4)$$

Where, V is the value of wind speed in the horizontal direction, v is the value of wind speed in a line of sight, $\theta$ is a zenith angle, and the indices specify a beam number, and the direction in the line of sight 801b is assumed to be positive.

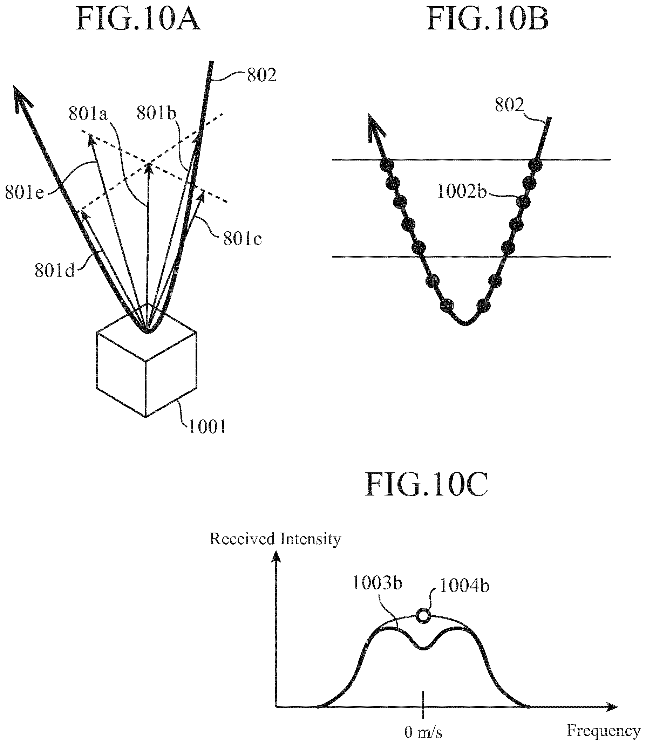

Contrastingly, FIG. 10A shows observations in lines of sight 801a-801e by using a laser radar device 1001 according to Embodiment 2 of the present invention. The reference numeral 802 indicates the wind to be observed, which is shown as including a downdraft and updraft. Further, FIG. 10B shows observation points 1002b at the time of observation along the line of sight 801b. Further, FIG. 10C shows a spectrum 1003b in the line of sight 801b, and a result 1004b of gravity center calculation.

As shown in FIG. 10B, the scanning method according to the present invention (FIG. 8B) enables discrete sampling of the values of wind speed of the updraft and downdraft of the wind 802. As a result, obtained spectral data shows a shape having double peaks as shown in FIG. 10C. Carrying out the gravity center calculation on the spectral data yields an approximately intermediate value of wind speed. As a result, compared with the conventional system described above, errors in the measurement of the wind velocity can be reduced. In this case, calculation of the average value of wind speed may be performed based on detection of such double peaks by using maximum likelihood estimation method or other methodologies.

As described above, according to Embodiment 2, the line of sight is switched to the next one every time scanning is performed. By switching the line of sight every scan, not every certain number of scans, the rate of measuring the wind velocity can be improved. As a result, the deterioration in the wind velocity measurement accuracy can be reduced even in a turbulent field.

EMBODIMENT 3

Unlike Embodiment 2 shown in FIG. 7, the line-of-sight wind velocity calculating unit 124 according to Embodiment 1 does not check SNR values of the signals passing through the incoherent integration. However, the line-of-sight wind velocity calculating unit 124 may be modified to check SNR values. By this, a minimum required numbers of incoherent additions for each range bin are performed, resulting in improvement of the wind velocity measurement rate and the wind velocity measurement accuracy.

It should be noted that combination, modification or omission of parts of embodiments described above may be made within the scope of the present invention.

INDUSTRIAL APPLICABILITY

A laser radar device according to the present invention is able to reduce the deterioration of the wind velocity measurement accuracy even in a turbulent field. Accordingly, the laser radar device is suitable for an application to a laser radar device for measuring values of wind speed in an observation space.

REFERENCE SIGNS LIST

1 multi-wavelength light oscillator; 2 optical coupler; 3 modulation unit; 4 multiplexer; 5 optical amplifier; 6 circulator; 7 demultiplexer/multiplexer; 8 transmitting/receiving optical system (transmitting/receiving unit); 9 multiplexer; 10 multiplexing coupler; 11 optical receiver; 12 signal analyzing unit; 13 storing and displaying unit; 14 light oscillator; 15 optical switching unit; 31 linear phase modulation signal generator; 32 optical phase modulator; 33 pulse signal generator; 34 optical intensity modulator; 121 A/D conversion unit; 122 FFT processing unit; 123 incoherent integration unit; 124 line-of-sight wind velocity calculating unit; 125 wind velocity vector calculating unit.

**Claims**

**1.**   A laser radar device comprising:

a multi-wavelength light oscillator to generate a plurality of light beams with different wavelengths;

a plurality of modulation units to modulate each of the plurality of light beams generated by the multi-wavelength light oscillator with a modulation frequency altered according to a corresponding line of sight of emission;

a transmitting/receiving unit to emit each of the light beams modulated by the modulation units in a corresponding line of sight, and receive reflected light beams;

an optical receiver to perform heterodyne detection by using the light beams generated by the multi-wavelength light oscillator and the light beams that are received by the transmitting/receiving unit and corresponding to the generated light beams, and detect beat signals in the respective lines of sight; and

a signal analyzing unit to calculate a value of Doppler wind speed in the respective lines of sight from the respective beat signals detected by the optical receiver, and calculate a value of three-dimensional wind speed using the values of Doppler wind speed.

2. A laser radar device comprising:

a light oscillator to generate a light beam;

a modulation unit to carry out modulate the light beam generated by the light oscillator;

an optical switching unit to switch, for each emission, lines of sight in which the light beam modulated by the modulation unit is to be emitted, and select one of the lines of sight;

a transmitting/receiving unit to emit the light beam modulated by the modulation unit in individual lines of sight selected by the optical switching unit, and receive reflected light beams;

an optical receiver to perform heterodyne detection by using the light beam generated by the light oscillator and the light beams received by the transmitting/receiving unit, and detect beat signals in the individual lines of sight; and

a signal analyzing unit to calculate a value of Doppler wind speed in the respective lines of sight from the respective beat signals detected by the optical receiver, and calculate a value of three-dimensional wind speed using the values of Doppler wind speed.

FIG.1

# FIG.2

**Modulation Unit** 3

31
Linear Phase Modulation Signal Generator

33
Pulse Signal Generator

32
Optical Phase Modulator

34
Optical Intensity Modulator

# FIG.3

Signal Analyzing Unit —12

A/D Conversion Unit —121

FFT Processing Unit —122

Incoherent Integration Unit —123

LOS Wind Velocity Calculating Unit —124

Wind Velocity Vector Calculating Unit —125

# FIG.4

```
                    ┌─────────┐
                    │  START  │
                    └─────────┘
                         │
                         ▼
         ┌──────────────────────────────────┐
         │ Generate Multi-wavelength Light   │─── ST401
         │ Beams and Split Them Into Two Ones│
         └──────────────────────────────────┘
                         │
ST405                    ▼
   ┌──────────────┐  ┌──────────────────────────┐
   │ Multiplex    │  │ Modulate Light Beams with │─── ST402
   │ light beams  │  │ Different Modulation      │
   └──────────────┘  │ Frequencies According to  │
          │          │ Each LOS                  │
          │          └──────────────────────────┘
          │                    │
          │                    ▼
          │          ┌──────────────────────────┐
          │          │ Multiplex Light Beams;    │─── ST403
          │          │ Amplify Light Beam;       │
          │          │ and Demultiplex Light Beam│
          │          │ According to Each         │
          │          │ Wavelength                │
          │          └──────────────────────────┘
          │                    │
          │                    ▼
          │          ┌──────────────────────────┐
          │          │ Emit Light Beams;         │─── ST404
          │          │ Receive and Multiplex     │
          │          │ Reflected Light Beams     │
          │          └──────────────────────────┘
          │                    │
          └───────────────────►▼
                     ┌──────────────────────────┐
                     │ Multiplex Light Beams     │─── ST406
                     └──────────────────────────┘
                                │
                                ▼
                     ┌──────────────────────────┐
                     │ Detect Beat Signal for    │─── ST407
                     │ Each LOS by Using         │
                     │ Heterodyne Detection      │
                     └──────────────────────────┘
                                │
                                ▼
                     ┌──────────────────────────┐
                     │ Calculate Doppler Wind    │─── ST408
                     │ Velocity in Each Los from │
                     │ Beat Signal, and          │
                     │ Calculate 3D Wind Velocity│
                     └──────────────────────────┘
                                │
                                ▼
                     ┌──────────────────────────┐
                     │ Store and Display         │─── ST409
                     │ Calculation Result        │
                     └──────────────────────────┘
                                │
                                ▼
                         ┌─────────┐
                         │   END   │
                         └─────────┘
```

# FIG.5

# FIG.6

EP 3 232 226 A1

# FIG.7

```
            ┌─────────────┐
            │    START    │
            └─────────────┘
                   │
                   ▼
      ╔═══════════════════════════╗
      ║  Beam Number b = 1, …, B  ║
      ╚═══════════════════════════╝
                   │
                   ▼
      ╔═══════════════════════════╗
      ║ Range Bin Number r = 1, …, R ║
      ╚═══════════════════════════╝
                   │
                   ▼
      ┌───────────────────────────┐
      │      A/D Conversion       │──ST701
      └───────────────────────────┘
                   │
                   ▼
      ┌───────────────────────────┐
      │      FFT Processing       │──ST702
      └───────────────────────────┘
                   │
                   ▼
      ┌───────────────────────────┐
      │   Incoherent Integration  │──ST703
      └───────────────────────────┘
                   │           ST704
                   ▼
      ◄═══════════════════════════►
       Peak of Spectral Data Is
       Equal to or Greater than        NO
       SNR Threshold?
      ◄═══════════════════════════►──────┐
                   │ YES                  │
                   ▼                      │
      ┌───────────────────────────┐       │
      │  Calculate LOS wind velocity │──ST705 │
      └───────────────────────────┘       │
                   │◄─────────────────────┘
                   ▼              ST706
      ◄═══════════════════════════►
       Required Numbers (LOSs) of
       Doppler Wind Velocities for    YES
       Calculation of Wind Velocity Vector ──┐
       Have Been Obtained?                    │    ST707
      ◄═══════════════════════════►           ▼
                   │ NO            ┌────────────────────┐
                   │              │  Calculate Wind    │
                   │              │  Velocity Vector   │
                   │              └────────────────────┘
                   │◄──────────────────────┘
                   ▼
      ╔═══════════════════════════╗
      ║          r = R?           ║
      ╚═══════════════════════════╝
                   │
                   ▼
      ╔═══════════════════════════╗
      ║          b = B?           ║
      ╚═══════════════════════════╝
                   │
                   ▼
            ┌─────────────┐
            │     END     │
            └─────────────┘
```

# FIG.8A

801a  801b  801c  801d  801e

Time

# FIG.8B

801c

801a  801e

801b  801d

Time

# FIG.9A

# FIG.9B

# FIG.9C

# FIG.10A

# FIG.10B

# FIG.10C

# FIG.11

EP 3 232 226 A1

# FIG.12

Pulse 1 — Frequency

+ + + + + + + + +

Pulse 2 — Frequency

+ + + + + + + + +

⋮

Pulse N — Frequency

Range Bin

# FIG.13

EP 3 232 226 A1

<div align="center">

**INTERNATIONAL SEARCH REPORT**

</div>

| | International application No. |
|---|---|
| | PCT/JP2014/083022 |

| A. CLASSIFICATION OF SUBJECT MATTER |
|---|
| *G01S17/95*(2006.01)i, *G01S7/484*(2006.01)i |

According to International Patent Classification (IPC) or to both national classification and IPC

| B. FIELDS SEARCHED |
|---|

Minimum documentation searched (classification system followed by classification symbols)
G01S17/95, G01S7/484

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2006-177853 A (Mitsubishi Electric Corp.), 06 July 2006 (06.07.2006), paragraphs [0002] to [0006], [0014] to [0027], [0046]; fig. 1 to 4 (Family: none) | 1 |
| Y | JP 2010-256333 A (Toshiba Corp.), 11 November 2010 (11.11.2010), paragraphs [0001], [0030] to [0034]; fig. 9 to 10 & US 2010/0253574 A1 | 1 |
| Y | JP 61-17969 A (NEC Corp.), 25 January 1986 (25.01.1986), page 1, right column, line 17 to page 2, upper left column, line 16 (Family: none) | 1 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 March 2015 (02.03.15) | 10 March 2015 (10.03.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

| International application No. |
|---|
| PCT/JP2014/083022 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2-132395 A  (Nippon Sheet Glass Co., Ltd.), 21 May 1990 (21.05.1990), page 1, right column, line 8 to page 2, lower right column, line 4 & US 4990791 A          & DE 3937851 A1 & FR 2639124 A1 | 1 |
| X | JP 2004-212274 A  (Mitsubishi Electric Corp.), 29 July 2004 (29.07.2004), paragraphs [0001], [0003] to [0007], [0026], [0031], [0071] to [0075]; fig. 11 to 12 (Family: none) | 2 |
| A | US 2011/0216307 A1  (Catch The Wind, Inc.), 08 September 2011 (08.09.2011), paragraphs [0005] to [0009], [0016] to [0018], [0025] to [0029]; fig. 1 to 2 & EP 2531861 A1          & WO 2011/096928 A1 & CA 2788799 A1 | 1-2 |

Form PCT/ISA/210 (continuation of second sheet) (July 2009)

## INTERNATIONAL SEARCH REPORT

| International application No. |
|---|
| PCT/JP2014/083022 |

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:

Claim 1 is an invention in which a plurality of light beams are each emitted with the wavelength thereof being varied according to a line-of-sight direction, whereas claim 2 is an invention in which a line-of-sight direction is switched each time and a light beam is emitted.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013063692 W
- JP 2013055825 W

- JP 2008039640 A

**Non-patent literature cited in the description**

- **BROWNING ; WEXLER.** *J. Appl. Meteor.,* 1968, vol. 4, 727-740